# EUROPÄISCHE PATENTSCHRIFT

(11) **EP 0 372 605 B1**
(45) Veröffentlichungstag und Bekanntmachung des Hinweises auf die Patenterteilung: **29.03.1995**
(21) Anmeldenummer: 89202916.6
(22) Anmeldetag: 17.11.1989
(51) Int. Cl.: F23J 13/02, F16L 58/08, F16B 5/00, F28F 19/00, F23G 5/48

(54) **Korrosionsschutz für Rauchgasentschwefelungseinrichtungen**
Corrosion protection for flue gas desulfurization installations
Protection contre la corrosion pour installations de désulfuration des fumées

(30) Priorität: 03.12.1988 DE 3840842
(43) Veröffentlichungstag der Anmeldung: 13.06.1990
(73) Patentinhaber: METALLGESELLSCHAFT Aktiengesellschaft, 60015 Frankfurt (DE)
(72) Erfinder: Koy, Hermann, D-8755 Alzenau-Albstadt (DE); Reuffurth, Rainer, D-6050 Offenbach (DE)

(56) Entgegenhaltungen:
- CH-A- 413 520
- DE-U- 8 713 476
- FR-A- 827 470
- US-A- 3 304 920
- US-A- 3 404 663
- US-A- 4 793 269
- PATENT ABSTRACTS OF JAPAN, Band 9, Nr. 92 (M-373)[1815], 20. April 1985, Seite 129 M 373; & JP-A-59 218 280 (BABCOCK) 08-12-1984

## Beschreibung

Die Erfindung bezieht sich auf ein Verfahren zum Aufbringen von Blechen aus korrosionsbeständigem Stahl auf den aus üblichem Baustahl bestehenden Wänden von Rauchgasleitungen, Apparaten, Entschwefelungseinrichtungen und dergleichen.

Abgase aus Kraftwerkskesseln, Schmelzöfen, Chemiefabriken etc. enthalten fast immer verschiedene korrosive Stoffe, die bei der Auslegung und beim Betrieb derartiger Anlagen zu beachten sind. So wird beispielsweise die wärmetechnische Ausnutzung von Abgasen aus Kraftwerkskesseln dadurch begrenzt, daß die Taupunkt-Temperatur aus Korrosionsgründen nicht unterschritten werden darf. Während man diesem Problem noch in einfacher Weise damit begegnen konnte, daß man unter Verzicht auf optimalen thermischen Wirkungsgrad eine Abgastemperatur mit geeignetem Abstand oberhalb des Taupunkts wählte, kann man bei den meisten der heute vorgeschriebenen Abgasreinigungsverfahren nicht darauf verzichten, aktive Korrosionsschutzmaßnahmen zu ergreifen. Bei den sogenannten nassen Gasreinigungsverfahren versteht sich das - unabhängig von der angewandten Temperatur - von selbst, weil die korrosiven Stoffe in den flüssigen Behandlungsmitteln gelöst sind, also in ihrer korrosionswirksamsten Form auftreten.

Aber auch bei den sogenannten halbtrockenen und trockenen Gasreinigungsverfahren, kann man den Korrosionsproblemen in der Regel nicht durch die Wahl einer "korrosionsunschädlichen" Temperatur ausweichen. Beim halbtrockenen Verfahren werden die Behandlungsmittel flüssig in den Gasstrom eingebracht, sollen aber vollständig verdampfen, damit nur trockene Reaktionsprodukte anfallen. Hier bestehen Korrosionsgefahren in den Bereichen, in denen noch flüssige Behandlungsmittel im Gasstrom vorhanden sind oder stromab davon durch Taupunktunterschreitungen im Falle unzureichender Regelung der Flüssigkeitszufuhr bzw. unbeabsichtigter zu tiefer Abkühlung der Abgase. Aber auch bei den sogenannten trockenen Abgasreinigungsverfahren können Korrosionsprobleme auftreten, wenn beispielsweise die Abgastemperatur aus Gründen der Verfahrensführung oder der Wirtschaftlichkeit unter die Taupunktgrenze abgekühlt werden muß.

Für Abgasreinigungsverfahren sind daher schon Korrosionsschutz-Auskleidungen vorgeschlagen worden. So zum Beispiel eine Beschichtung der korrosionsgefährdeten Flächen mit Gummi oder mit Glasfasermatten und Polyesterharzen. Beide Methoden erfordern eine sehr sorgfältige Vorbereitung des Untergrundes, weil eine vollständige Verbindung zwischen Beschichtung und dem meist aus normalen Baustahl bestehenden Untergrund erreicht werden muß. Bei diesen Verfahren ist daher schon das Einbringen der Korrosionsschutz-Auskleidung sehr aufwendig. Beide Methoden haben außerdem den gravierenden Nachteil, daß die verwendeten Materialien brennbar sind, daß also an den Anlageteilen nachträglich keine Schweißarbeiten mehr durchgeführt werden können. Bisher ist es auch noch nicht gelungen, mit derartigen Auskleidungen Standzeiten von mehr als 4 bis 5 Jahren zu erreichen, was für die meisten Anwendungsfälle keineswegs ausreichend ist.

Es ist auch schon vorgeschlagen worden, Bleche aus korrosionsbeständigem Stahl auf den aus üblichem Baustahl bestehenden Wänden durch sogenanntes Lochschweißen zu befestigen. Dabei werden die Wände im Abstand der gewünschten Befestigungspunkte mit Löchern versehen und die Bleche längs des Umfangs der Löcher mit dem Baustahl der Wände verschweißt. Dieses Verfahren ist verhältnismäßig aufwendig und wird auch deswegen abgelehnt, weil beim Schweißen eine Vermischung des korrosionsbeständigen mit dem nicht korrosionsbeständigen Material stattfindet, so daß im Bereich der Schweißnaht eine neue Legierung entsteht, die nicht korrosionsbeständig ist. Wie weit das Blech aus korrosionsbeständigem Stahl aufgeschmolzen wird, hängt von der Geschicklichkeit und Sorgfalt des Schweißers ab, so daß nicht immer eine gleichmäßige Verarbeitung erwartet werden kann und die Gefahr besteht, daß im Schweißnahtbereich nur noch ein eingeschränkter, unter Umständen auch gar kein Korrosionsschutz mehr besteht.

Bei einem anderen bekannten Verfahren kann man den letztgenannten Nachteil zwar vermeiden, es ist aber noch aufwendiger. Hierbei wird ein Gitter von Blechstreifen aus korrosionsbeständigem Stahl auf die Wände aufgebracht und anschließend auf dieses Gitter die flächendeckenden Bleche aus korrosionsbeständigem Stahl aufgeschweißt, wobei der Gitterabstand nicht größer bemessen werden kann, als der von der Blechdicke des korrosionsbeständigen Stahls abhängige Abstand für die Befestigungsnähte. Liegt dieser bei 0,5 m, so kann man nur 0,25 m² große Bleche aus korrosionsbeständigem Stahl verwenden, von denen jedes zur Befestigung 2 m Schweißnaht erfordert. Zusammen mit der zur Befestigung des Gitters notwendigen Schweißarbeit ergibt sich so ein sehr aufwendiges Verfahren, auf das man nur zurückgreifen wird, wenn überhaupt kein anderer Weg zur Verfügung steht.

In der DE-U-8 713 476 wird eine Vorrichtung zur Verbindung zweier Bleche beschrieben, die im Schaft zwischen Bolzen und Blech über die gesamte Schaftlänge eine Hülse aus Isolierstoff, vorzugsweise aus Kunststoff, aufweist. Die Hülse liegt direkt am Blech an, das keine Löcher aufweist. Sie weist einen umlaufenden Kragen auf, der verhindert, daß der in der Hülse angeordnete Bolzen direkt mit einem zweiten Blech verbunden ist. Nachträgliche Reparaturarbeiten einschließlich Schweißen sind bei der in der DE-U-8 713 476 beschriebenen Vorrichtung nur auf Kosten der Gasdichtigkeit der Verbindung möglich.

Es besteht somit die Aufgabe, für die Innenflächen von Abgaskanälen und gasführenden Teilen in Einrichtungen zur Wärmeübertragung, Gasreinigung und dergleichen eine Korrosionsschutz-Auskleidung vorzuschlagen, die die vorgenannten Nachteile nicht aufweist. Sie soll universell anwendbar, mit vertretbarem Aufwand einzubringen und sehr haltbar sein. Außerdem sollen Reparaturarbeiten einschließlich Schweißen sowohl an den gasführenden Bauteilen selbst, wie auch an der Auskleidung ohne Schwierigkeiten möglich sein.

Alle diese Anforderungen können erfüllt werden, wenn man erfindungsgemäß auf den aus üblichem Baustahl bestehenden Wänden von Rauchgasleitungen, Apparaten, Entschwefelungseinrichtungen und dergleichen Bleche aus korrosionsbeständigem Stahl aufbringt, und zwar indem man
a) die Wände in vorgegebenen Abständen mit Bohrungen versieht,
b) die Bleche aus korrosionsbeständigem Stahl von innen gegen die Wände anlegt,
c) Bolzen von außen durch die Bohrungen steckt und mit den Blechen durch Bolzenschweißen verschweißt und
d) die Bolzen außen mit den Wänden gasdicht verbindet.

Ausgestaltungen des Erfindungsgedankens sind in den Unteransprüchen 2 bis 12 beschrieben.

Weitere Einzelheiten werden anhand der in den Figuren 1 bis 3 dargestellten Ausführungsbeispiele näher erläutert.

Figur 1 zeigt einen Teilschnitt durch die Wand (1) einer Rauchgasleitung.

Figur 2 zeigt unter a bis d verschiedene Ausführungsformen der Bolzen (3).

Figur 3 zeigt einen Teilschnitt durch eine Schraubverbindung.

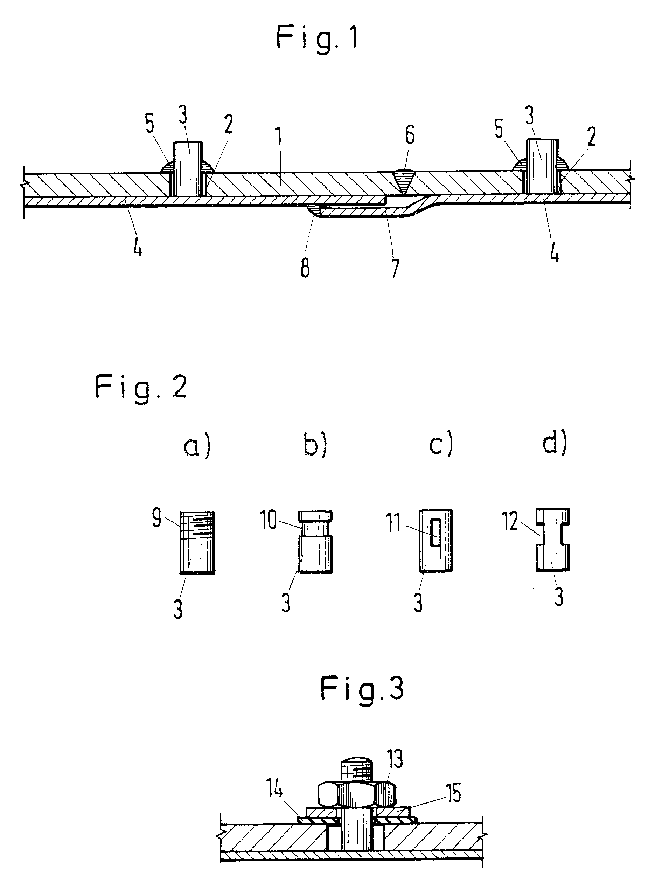

Die in Figur 1 dargestellte Wand (1) einer Rauchgasleitung besteht aus 6 mm dicken Walzblechen aus üblichem Baustahl, die durch eine Schweißnaht (6) bündig miteinander verbunden sind. In die Wand (1) sind Bohrungen (2) eingebracht, durch die Bolzen (3) gesteckt sind. Diese Bolzen (3) sind durch Bolzenschweißen an 2 mm dicken Blechen (4) aus korrosionsbeständigem Stahl befestigt, die ihrerseits randseitig überlappend miteinander verbunden sind (7/8). Schließlich sind die Bolzen (3) außen durch eine Kehlnaht (5) gasdicht mit der Wand (1) verschweißt, nachdem zuvor die Bleche (4) zur Anlage an der Wand gebracht worden sind. Zu diesem Zweck köhnen die Bolzen (3) gemäß Figur 2 in unterschiedlicher Form an ihrem freien Ende für den Eingriff eines Spannwerkzeugs ausgebildet sein. Die Variante a weist ein Gewinde auf, über das mittels einem sich auf der Wand (1) abstützenden Werkzeug Zugkräfte auf den Bolzen (3) übertragen werden können. Mit einem anderen Werkzeug kann in die umlaufende Nut (10) gemäß Figur 2b eingegriffen werden. In die Ausnehmungen (11 bzw.12) kann man sich wiederum auf der Wand (1) abstützende Keile eintreiben und so die Bleche (4) zur dichten Anlage an der Wand (1) bringen.

In dem in Figur 1 dargestellten Beispiel weisen die Bohrungen (2) einen Durchmesser von 9 mm auf, während die Bolzen (3) einen Durchmesser von 8 mm haben. Der zwischen Bohrung (2) und Bolzen (3) verbleibende schmale Ringspalt ist ausreichend, um unerwünschte Verschweißungen der Bolzen (3) mit der Wand (1) zu vermeiden. Man erhält eine verläßliche Befestigung auf den Blechen (4), ohne daß der beim Bolzenschweißen häufig benutzte Keramikring zur Verhinderung von Fehlschweißungen erforderlich ist. Das Verfahren benötigt auch kein Schutzgas und kein Pulver zum Abdecken der Schweißstelle.

Bei dem in Figur 3 dargestellten Beispiel weist die Bohrung (2) einen nennenswert größeren Durchmesser als der Bolzen (3) auf. Im übrigen ist die Befestigung unter Zwischenlage einer Dichtung (14) und einer Unterlegscheibe (15) durch eine auf das mit Gewinde (9) versehene freie Ende des Bolzens (2) aufgeschraubte Mutter (13) hergestellt. Dabei wird die Mutter (13) nur so fest angezogen, daß zum Ausgleich unterschledlicher Wärmedehnungen eine gewisse Relativbewegung zwischen Wand (1) und Blech (4) möglich ist.

Schließlich ist es mit dem erfindungsgemäßen Verfahren auch möglich, nur eine Art Unterkonstruktion für die Abtragung und Befestigung der Bleche (4) aus korrosionsbeständigem Stahl auf den aus üblichem Baustahl bestehenden Wänden von Rauchgasleitungen und dergleichen zu befestigen.

## Patentansprüche

1. Verfahren zum Aufbringen von Blechen aus korrosionsbeständigem Stahl auf den aus üblichem Baustahl bestehenden Wänden von Rauchgasleitungen, Apparaten, Entschwefelungseinrichtungen und dergleichen, wobei
a) die Wände (1) in vorgegebenen Abständen mit Bohrungen (2) versehen,
b) die Bleche (4) aus korrosionsbeständigem Stahl von innen gegen die Wände (1) angelegt,
c) Bolzen (3) von außen durch die Bohrungen (2) gesteckt und mit den Blechen (4) durch Bolzenschweißung verschweißt und
d) die Bolzen (3) außen mit den Wänden (1) gasdicht verbunden werden.

2. Verfahren nach Anspruch 1, wobei die Bolzen (3) aus korrosionsbeständigem Stahl, vorzugsweise aus dem gleichen Material wie die Bleche (4) bestehen.

3. Verfahren nach einem der Ansprüche 1 oder 2, wobei die Bolzen (3) an ihren freien Enden eine umlaufende Nut (10) aufweisen.

4. Verfahren nach einem der Ansprüche 1 oder 2, wobei die Bolzen (3) eine mittige Ausnehmung (11) für den Eingriff eines Spannwerkzeugs aufweisen.

5. Verfahren nach einem der Ansprüche 1 oder 2, wobei die Bolzen (3) äußere, Ausnehmungen (12) für den Eingriff eines Spannwerkzeugs aufweisen.

6. Verfahren nach einem der Ansprüche 1 oder 2, wobei die Bolzen (3) an ihren freien Enden Gewinde (9) aufweisen.

7. Verfahren nach Anspruch 1 bis 6, wobei die Bohrungsdurchmesser (2) nur wenig größer sind als die Bolzendurchmesser und daß die Bolzen (3) außen mit den Wänden (1) durch Schweißen gasdicht verbunden werden.

8. Verfahren nach Anspruch 6, wobei die Bohrungsdurchmesser nennenswert größer sind als die Bolzendurchmesser und daß die Befestigung der Bleche (4) mittels auf die freien Enden der Bolzen (3) aufgeschraubte Muttern (13) erfolgt.

9. Verfahren nach Anspruch 8, wobei außerdem Dichtungen (14) und Unterlagscheiben (15) verwendet werden.

10. Verfahren nach einem der Ansprüche 1 bis 9, wobei die Bleche (4) an den Rändern (7/8) überlappend angeordnet und miteinander verschweißt sind.

11. Verfahren nach einem der Ansprüche 1 bis 10, wobei 1 bis 10 Verbindungsstellen pro m² vorgesehen sind.

12. Anwendung des Verfahrens nach einem der Ansprüche 1 bis 11 auf die Herstellung vorgefertigter Wandungsteile in der Werkstatt.

## Claims

1. A method for applying sheets of corrosion-resistant steel to the walls of flue gas ducts, apparatus, desulphurisation apparatus and the like, which are made of standard structural steel, wherein
a) the walls (1) are provided with bores (2) at preset distances,
b) the sheets (4) of corrosion-resistant steel are applied against the walls (1) from the inside,
c) bolts (3) are inserted through the bores (2) from the outside and are welded to the sheets (4) by stud welding, and
d) the bolts (3) are connected externally to the walls (1) in gastight manner.

2. A method according to Claim 1, wherein the bolts (3) are made of corrosion-resistant steel, preferably of the same material as the sheets (4).

3. A method according to one of Claims 1 or 2, wherein the bolts (3) have a circumambient groove (10) on their free ends.

4. A method according to one of Claims 1 or 2, wherein the bolts (3) have a central recess (11) for a clamping tool to engage.

5. A method according to one of Claims 1 or 2, wherein the bolts (3) have external recesses (12) for a clamping tool to engage.

6. A method according to one of Claims 1 or 2, wherein the bolts (3) have threads (9) on their free ends.

7. A method according to Claims 1 to 6, wherein the bore diameters (2) are only slightly larger than the bore diameters and the bolts (3) are connected externally to the walls (1) in gastight manner by welding.

8. A method according to Claim 6, wherein the bore diameters are considerably larger than the bolt diameters and the fastening of the sheets (4) takes place by means of nuts (13) screwed on to the free ends of the bolts (3).

9. A method according to Claim 8, wherein furthermore seals (14) and washers (15) are used.

10. A method according to one of Claims 1 to 9, wherein the sheets (4) are arranged to overlap on the edges (7/8) and are welded together.

11. A method according to one of Claims 1 to 10, wherein 1 to 10 connection points are provided per m².

12. The application of the method according to one of Claims 1 to 11 to the production of prefabricated wall parts in the workshop.

## Revendications

1. Procédé d'application de tôles en acier résistant à la corrosion sur les parois en acier de construction de conduits de gaz de fumée d'appareillages et de dispositifs de désulfuration et analogues qui consiste
a) à munir les parois de trous (2) à des intervalles donnés à l'avance,
b) à appliquer les tôles (4) en acier résistant à la corrosion de l'intérieur sur les parois (1)
c) à enfiler des goujons (3) de l'extérieur dans les trous (2) et à les souder, par soudage de goujon, aux tôles (4)
d) à relier de manière étanche au gaz les goujons (3) de l'extérieur aux parois (1).

2. Procédé suivant la revendication 1, dans lequel les goujons (3) en acier résistant à la corrosion sont de préférence en le même matériau que les tôles (4).

3. Procédé suivant la revendication 1 ou 2, dans lequel les goujons (3) comportent sur leur extrémité libre une gorge (10) périphérique.

4. Procédé suivant l'une des revendications 1 ou 2, dans lequel les goujons (3) comportent un évidement (11) au milieu pour la prise d'un outil de serrage.

5. Procédé suivant l'une des revendications 1 ou 2, dans lequel les goujons (3) comportent des évidements (12) extérieurs pour la prise d'un outil de serrage.

6. Procédé suivant l'une des revendications 1 ou 2, lequel les goujons (3) comportent sur leur extrémité des filetages (9).

7. Procédé suivant l'une des revendications 1 à 6, lequel les diamètres (2) des trous sont de peu érieurs aux diamètres des goujons et les goujons (3) sont reliés de manière étanche au gaz de l'extérieur aux parois (1) par soudage.

8. Procédé suivant la revendication 6, caractérisé en ce que les diamètres des trous sont notablement plus grands que les diamètres des goujons et la fixation des tôles s'effectue au moyen d'écrous (13) vissés sur les extrémités libres des goujons (3).

9. Procédé suivant la revendication 8, dans lequel il est utilisé en outre des garnitures d'étanchéité (14) et des rondelles (15).

10. Procédé suivant la revendication 9, dans lequel les tôles (4) sont à recouvrement sur les bords (7, 8) et sont soudées entre elles.

11. Procédé suivant l'une des revendications 1 à 10, dans lequel il est prévu de 1 à 10 points de fixation par m².

12. L'utilisation du procédé suivant l'une des revendications 1 à 11, pour la fabrication de parties de paroi pré-fabriquées en atelier.
